# FASCICULE DE BREVET EUROPEEN

(11) **EP 4 217 148 B1**
(45) Date de publication et mention de la délivrance du brevet: **06.11.2024**
(21) Numéro de dépôt: 21783332.6
(22) Date de dépôt: 09.09.2021
(51) Int. Cl.: B25B 27/00, A47J 31/06

(54) **PROCÉDÉ ET DISPOSITIF DE POSE/DÉPOSE DE JOINT**
VERFAHREN UND VORRICHTUNG ZUM ANBRINGEN/ENTFERNEN EINER DICHTUNG
METHOD AND DEVICE FOR INSTALLING/REMOVING A SEAL

(30) Priorité: 28.09.2020 FR 2009843
(43) Date de publication de la demande: 02.08.2023
(73) Titulaire: Rioux, Fabrice, 72200 Bazouges Cré sur Loir (FR)
(72) Inventeur: RIOUX, Fabrice, 72200 BAZOUGES CRE SUR LOIR (FR); DROUET, Bruno, 72240 MEZIERES SOUS LAVARDIN (FR)
(74) Mandataire: Ipsilon
(86) Numéro de dépôt international: PCT/FR2021/051548
(87) Numéro de publication internationale: WO 2022/064119

(56) Documents cités:
- FR-A1- 2 992 247
- US-A- 5 634 394
- US-A1- 2006 000 315
- US-B2- 9 703 069

## Description

La présente invention concerne un procédé et un dispositif de pose/dépose de joint, notamment de joint de groupe d'injection de machine à café. FR 2992247 divulgue un outil (10) pour l'extraction d'un joint.

Les machines à café pour la réalisation d'expresso, telles que celles commercialisées, par exemple, sous la marque Conti (marque déposée) et utilisées en particulier dans la restauration ou dans les cafés ou autre, sont bien connues à ceux versés dans cet art. Ces machines à café peuvent être à un ou plusieurs groupes, chaque groupe ménageant une cavité logeant une douchette et un diffuseur. Un porte-filtre peut être couplé à chaque groupe et un joint amovible est prévu au niveau du fond de la cavité du groupe. Ce joint doit être régulièrement changé. Ce joint est engagé à force dans une gorge annulaire équipant le fond d'une cavité délimitée par le groupe. Jusqu'à présent, ce joint est monté ou démonté de manière manuelle. Comme le groupe peut être porté à une température de 120°, il est nécessaire de laisser refroidir le groupe avant de pouvoir changer le joint ce qui peut entraîner un temps d'immobilisation important de la machine à café. Par ailleurs, le refroidissement total n'est jamais garanti de sorte qu'il existe un risque de brûlure pour l'opérateur lors d'une telle opération de pose ou de dépose du joint. Enfin, la disposition des machines à café sur des comptoirs oblige souvent l'opérateur à se contorsionner pour avoir accès à l'intérieur du groupe. En conséquence, et pour les raisons mentionnées ci-dessus, l'opération de montage ou de démontage d'un joint du groupe est longue et fastidieuse.

Un but de l'invention est de proposer un dispositif de pose/dépose de joint, notamment de joint de groupe d'injection de machine à café, dont la conception permet de procéder à la pose, c'est-à-dire au montage, ou à la dépose, c'est-à-dire au démontage du joint, en un temps court et sans risque de brûlure.

Un autre but de l'invention est de proposer un dispositif de pose/dépose de joint, notamment de joint de groupe d'injection de machine à café, dont la conception permet de procéder à la pose, c'est-à-dire au montage, ou à la dépose, c'est-à-dire au démontage du joint, sans avoir besoin d'attendre un refroidissement du groupe de la machine à café.

A cet effet, l'invention a pour objet un dispositif de pose/dépose de joint, notamment de joint de groupe d'injection de machine à café, caractérisé en ce que ledit dispositif comprend un corps dit allongé s'étendant depuis une de ses extrémités en direction de son extrémité opposée suivant un axe longitudinal, une poignée de saisie dudit corps s'étendant au moins radialement par rapport audit corps, et deux séries d'oreilles disposées l'une, à l'une des extrémités , l'autre, à l'autre des extrémités dudit corps allongé, en ce que chaque oreille d'une série, radiale par rapport audit corps, est disposée autour dudit corps au moins partiellement sur un cercle de centre disposé sur l'axe longitudinal dudit corps, en ce que chaque oreille d'une série présente une face dite intérieure tournée vers les oreilles de l'autre série et une face extérieure opposée, en ce que la face intérieure des ou d'au moins deux des oreilles de chaque série d'oreilles forme une rampe hélicoïdale inclinée pour permettre, à l'état positionné des rampes d'une série d'oreilles en contact d'appui avec des surfaces inclinées formant rampes de formes complémentaires et, à l'état entraîné en rotation dudit corps autour de son axe longitudinal, un déplacement axial dudit corps, en ce que l'une des extrémités, dite extrémité de pose de joint, dudit corps est munie d'un plateau pour la réception d'un joint à poser, en ce que ledit plateau est un plateau tournant autour d'un axe confondu avec l'axe longitudinal dudit corps, et en ce que l'extrémité du corps opposée à l'extrémité de pose de joint et dite extrémité de dépose de joint dudit corps est munie d'organes d'ancrage s'étendant en saillie de ladite extrémité. La conception du dispositif permet donc par simple entraînement en rotation du corps saisi par une poignée radiale audit corps de procéder au montage ou au démontage du joint. Le risque de brûlure est donc considérablement réduit et l'opération peut être réalisée sans attendre le refroidissement du groupe de la machine à café.

Selon un mode de réalisation de l'invention, les organes d'ancrage sont disposés sur un cercle de centre disposé sur l'axe de rotation du plateau tournant. Il en résulte une simplicité de mise en oeuvre par simple rotation du corps.

Selon un mode de réalisation de l'invention, l'extrémité de dépose de joint dudit corps présente une surface plane et les organes d'ancrage se présentent sous forme d'ergots ou de dents en crochet en saillie de ladite surface plane. Cette disposition permet de garantir un ancrage aisé des organes d'ancrage dans le joint souple généralement élastiquement déformable.

Selon un mode de réalisation de l'invention, ladite poignée de saisie forme un manche.

Selon un mode de réalisation de l'invention, le manche est un manche télescopique. Grâce à cette conception, l'accès à des emplacements de groupes difficilement accessibles est facilité.

Selon un mode de réalisation de l'invention, le plateau tournant est muni d'une saillie circulaire délimitant à la surface du plateau un logement circulaire. La présence d'une telle saillie facilite le positionnement par l'opérateur du joint sur le dispositif. Il en résulte un gain de temps supplémentaire et une garantie d'un positionnement optimal du joint.

Selon un mode de réalisation de l'invention, les rampes inclinées des faces intérieures des oreilles sont inclinées pour s'étendre de manière parallèle d'une série d'oreilles à une autre lorsque les inclinaisons des pentes sont identiques.

L'invention a encore pour objet un procédé de pose d'un joint d'un groupe de machine à café, ledit groupe définissant une cavité ouverte dont le fond est muni d'une gorge annulaire de réception du joint à poser, l'entrée de la cavité, opposée audit fond, étant munie d'une aile circonférentielle interne avec une face tournée vers le fond de la cavité, cette face de l'aile tournée vers le fond de la cavité étant munie de surfaces inclinées formant rampes séparées l'une de l'autre par des ouvertures en forme d'encoches ménagées dans ladite aile, caractérisé en ce que le procédé comprend, pour la pose du joint à l'aide d'un dispositif du type précité, une étape de positionnement des oreilles de l'extrémité de pose en regard des encoches du groupe et d'introduction axiale du plateau tournant pré-équipé du joint à poser à l'intérieur de la cavité avant entraînement en rotation dudit corps autour de son axe longitudinal suivant un premier sens de rotation pour générer par coopération des surfaces inclinées formant rampes de l'aile avec les rampes hélicoïdales inclinées de forme complémentaire des oreilles du corps un déplacement axial du corps dans le sens d'un rapprochement de l'extrémité de pose du corps du fond de la cavité jusqu'à insertion du joint reposant sur le plateau tournant dans la gorge annulaire. Il en résulte un montage du joint en un temps court et sans risque de brûlure de l'opérateur.

Selon un mode de mise en oeuvre du procédé, le procédé comprend, après l'étape d'entraînement en rotation dudit corps autour de son axe longitudinal suivant un premier sens de rotation, une étape d'entraînement en rotation du corps autour de son axe longitudinal suivant un deuxième sens de rotation opposé au premier sens de rotation pour générer, par coopération des surfaces inclinées formant rampes de l'aile avec les rampes hélicoïdales inclinées de forme complémentaire des oreilles du corps, un déplacement axial du corps dans le sens d'un écartement de l'extrémité de pose du corps du fond de la cavité du groupe jusqu'à positionnement des oreilles de l'extrémité de dépose du corps en regard des encoches de l'aile en vue d'une sortie axiale du corps de l'intérieur de la cavité.

L'invention a encore pour objet un procédé de pose d'un joint d'un groupe de machine à café, ledit groupe définissant une cavité ouverte dont le fond est muni d'une gorge annulaire de réception du joint à démonter, l'entrée de la cavité, opposée audit fond, étant munie d'une aile circonférentielle interne avec une face tournée vers le fond de la cavité, cette face de l'aile tournée vers le fond de la cavité étant munie de rampes inclinées séparées l'une de l'autre par des ouvertures en forme d'encoches ménagées dans ladite aile, caractérisé en ce que le procédé comprend, pour le démontage du joint à l'aide d'un dispositif du type précité, une étape de positionnement des oreilles de l'extrémité de dépose en regard des encoches de l'aile et d'introduction axiale du corps à l'intérieur de la cavité du groupe, une étape d'entraînement en rotation du corps autour de son axe longitudinal suivant un premier sens de rotation pour générer par coopération des surfaces inclinées formant rampes de l'aile avec les rampes hélicoïdales inclinées de forme complémentaire des oreilles du corps un déplacement axial du corps dans le sens d'un rapprochement de l'extrémité de dépose du corps du fond de la cavité du groupe et par suite, la venue en prise des organes d'ancrage de l'extrémité de dépose du corps avec le joint à démonter et une étape d'entraînement en rotation du corps autour de son axe longitudinal suivant un deuxième sens de rotation opposé au premier sens de rotation pour générer par coopération des surfaces inclinées formant rampes de l'aile avec les rampes hélicoïdales inclinées de forme complémentaire des oreilles du corps un déplacement axial du corps dans le sens d'un écartement de l'extrémité de dépose du corps du fond de la cavité du groupe jusqu'à positionnement des oreilles de l'extrémité de dépose du corps en regard des encoches de l'aile en vue d'une sortie axiale du corps de l'intérieur de la cavité. Il en résulte un démontage du joint en un temps court et sans risque de brûlure de l'opérateur.

### Brève description des dessins

L'invention sera bien comprise à la lecture de la description suivante d'exemples de réalisation, en référence aux dessins annexés dans lesquels :
[Fig. 1] représente une vue en perspective d'une machine à café conforme à l'état de la technique ;
[Fig. 2] représente une vue partielle en coupe d'un groupe de la machine à café de la figure 1, le porte-filtre ayant été omis ;
[Fig. 3A] représente une vue partielle de dessous d'un groupe d'une machine à café conforme à la figure 1 ;
[Fig. 3B] représente une vue schématique d'un exemple de principe du fonctionnement d'une machine à café conforme à la figure 1 ;
[Fig. 4] représente une vue schématique de face d'un dispositif de pose/dépose de joint conforme à l'invention ;
[Fig. 5] représente une vue schématique de côté d'un dispositif de pose/dépose de joint conforme à l'invention ;

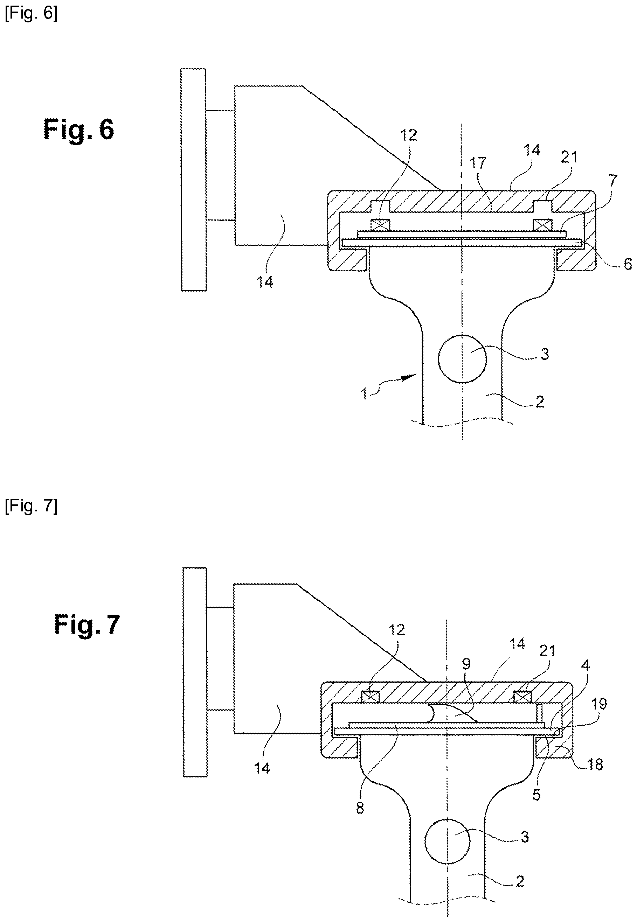

[Fig. 6] représente une vue schématique partielle de côté d'un dispositif de pose/dépose de joint conforme à l'invention à l'état inséré de l'extrémité de pose de joint du corps du dispositif dans un groupe d'une machine à café en vue de la pose du joint ;
[Fig. 7] représente une vue schématique partielle de côté d'un dispositif de pose/dépose de joint conforme à l'invention à l'état inséré de l'extrémité de dépose de joint du corps du dispositif dans un groupe d'une machine à café en vue de la dépose du joint ;

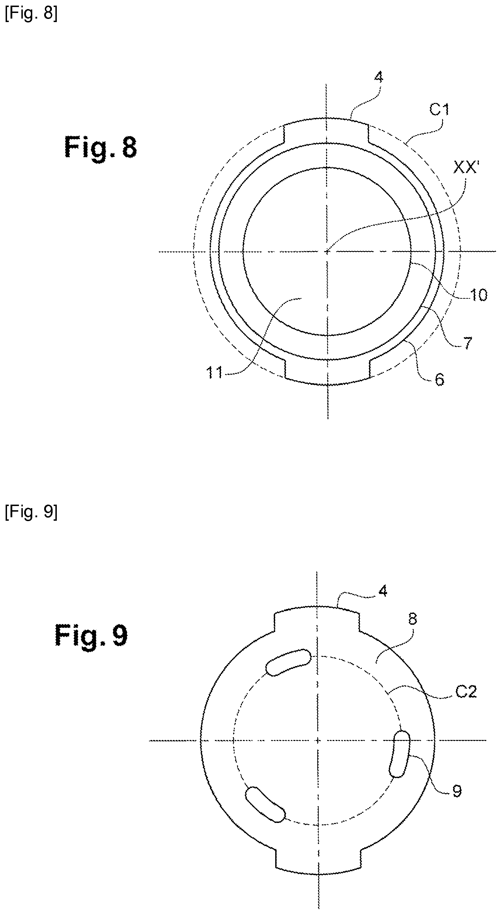

[Fig. 8] représente une vue schématique de dessus de l'extrémité de pose de joint dudit corps ;
[Fig. 9] représente une vue schématique de dessus de l'extrémité de dépose de joint dudit corps.

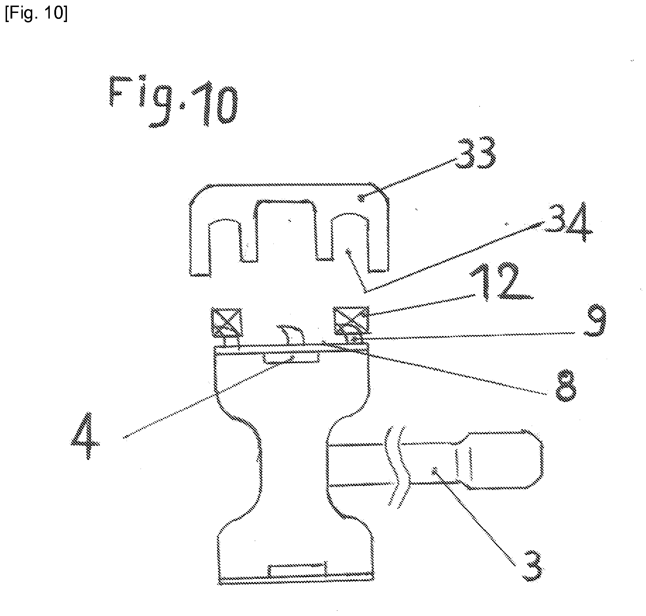

[Fig. 10] représente une vue schématique partielle en coupe d'un dispositif de pose/dépose de joint conforme à l'invention à l'état couplé de l'extrémité de dépose de joint du corps du dispositif avec un joint, ladite extrémité étant apte à être coiffée d'un couvercle.

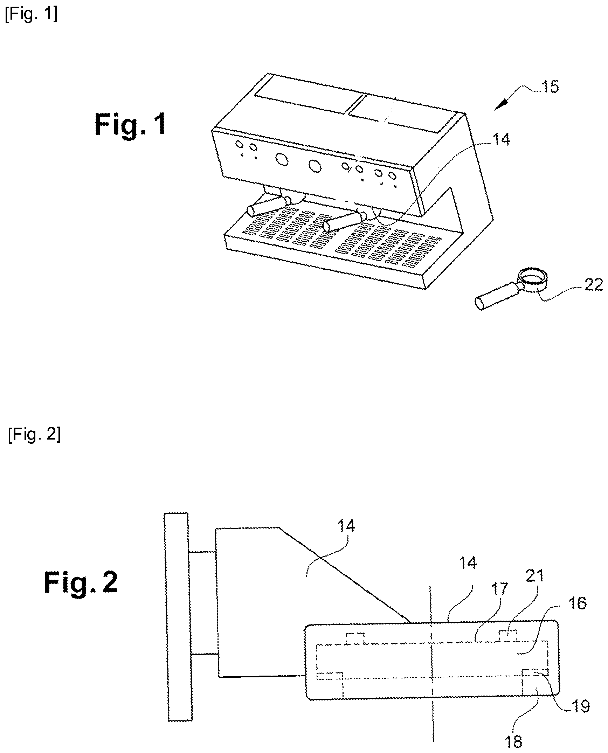

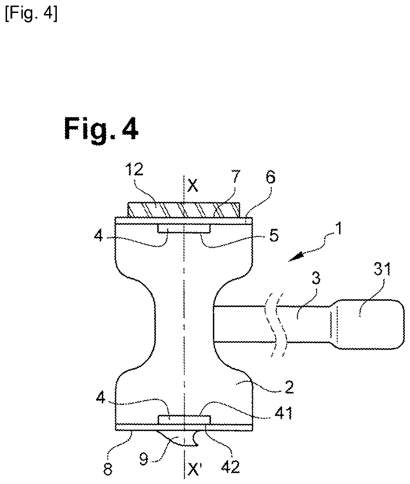

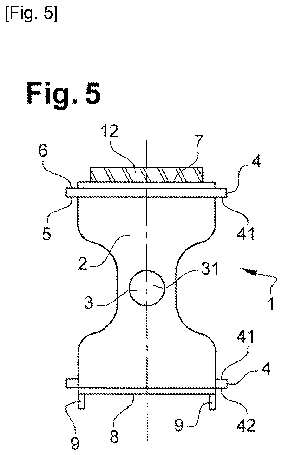

Comme mentionné ci-dessus, l'invention a pour objet un dispositif 1 de pose/dépose de joint du type de celui représenté par exemple aux figures 4 et 5 et le procédé associé en vue de la pose ou la dépose d'un joint 12 dans une machine 15 à café, telle que celle illustrée à la figure 1. Cette machine 15 à café comprend, de manière en soi connue, un ou plusieurs groupes 14. La machine 15 à café représentée est une machine à deux groupes. Chaque groupe 14 est fixé au bâti de la machine 15 à café et un porte-filtre 22 est couplable audit groupe 14.

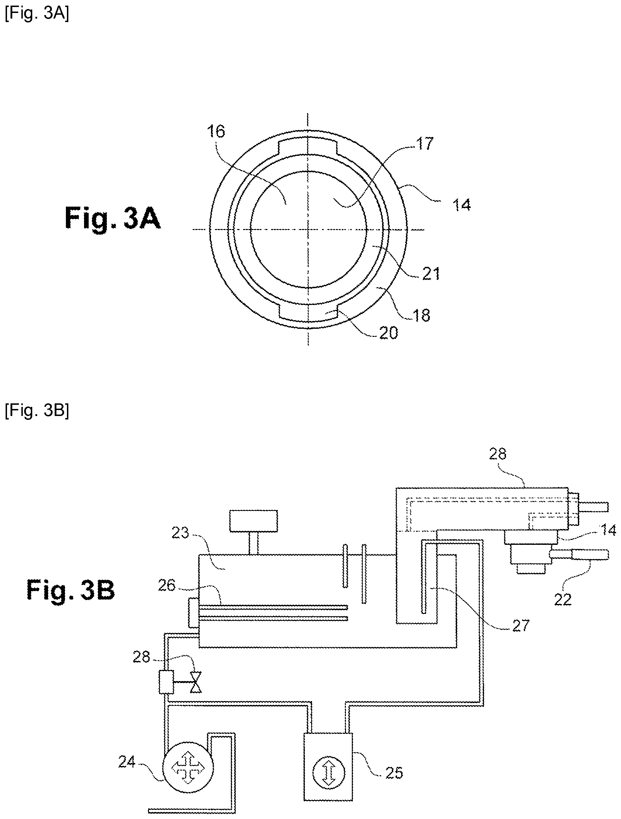

De manière en soi connue, le groupe 14 définit, comme illustré à la figure 2, une cavité 16 ouverte avec un fond 17 et une entrée. Le fond et l'entrée sont disposés au moins partiellement en regard l'un de l'autre et sont reliés l'un à l'autre par une paroi latérale périphérique. La cavité 16 est circulaire. Le fond 17 de la cavité est muni d'une gorge 21 annulaire de réception du joint 12 à poser. Ce joint 12 peut être un joint plat annulaire circulaire. Cette gorge 21 annulaire et l'entrée de la cavité 16 qui comprend une ouverture circulaire sont coaxiales. Cette entrée est munie d'une aile 18 formée par un retour en direction de l'intérieur de la cavité 16 de la paroi latérale périphérique de la cavité 16. Cette aile 18 circonférentielle interne présente une face tournée vers le fond 17 de la cavité 16 et une face opposée. La face de l'aile 18 circonférentielle interne tournée vers le fond 17 de la cavité 16 est munie de surfaces 19 inclinées formant rampes. Ces surfaces 19 inclinées tendent chacune à former une rampe hélicoïdale s'étendant le long d'un secteur de l'aile 18 circonférentielle interne. En effet, l'aile 18 est une aile discontinue présentant des ouvertures formant des encoches 20 dans ladite aile comme illustré à la figure 3A. Chaque surface 19 inclinée est ménagée au niveau d'un secteur de l'aile 18 s'étendant entre deux ouvertures et se développe depuis une ouverture en direction de l'ouverture la plus proche en tendant par exemple à former une surface inclinée se rapprochant depuis une extrémité en direction de son extrémité opposée du fond 17 de la cavité. Dans l'exemple représenté, l'aile comprend deux ouvertures en forme d'encoche 20 et donc deux surfaces 19 inclinées formant rampes avec des pentes identiques et de même sens, c'est-à-dire par exemple des pentes ascendantes lorsqu'on se déplace sur un tour en suivant l'aile et en passant d'une ouverture à une autre de ladite aile.

Cette construction est parfaitement classique pour permettre un couplage avec un porte-filtre 22 qui comporte des oreilles radiales avec des rampes inclinées de forme complémentaire des surfaces 19 inclinées décrites ci-dessus.

Les éléments de base d'une telle machine 15 à café sont parfaitement connus et sont pour mémoire illustrés à la figure 3B qui montre un exemple d'une machine à café comprenant une cuve de réserve d'eau représentée en 23 aux figures, une pompe représentée en 24, un débitmètre représenté en 25, des éléments 26 chauffants, tels que des résistances électriques, du contenu de la cuve 23 à eau et un thermoplongeur 27. Enfin, un pressostat et des électrovannes représentées en 28 sont prévus. Le fonctionnement d'une telle machine ne sera pas décrit car il est bien connu à ceux versés dans cet art.

Une telle machine 15 à café comprend, par groupe 14, une douchette démontable logée à l'intérieur de la cavité du groupe, cette douchette étant alimentée en eau chaude par le reste de ladite machine 15 à café à des fins de percolation à travers le porte-filtre 22 couplable au groupe et qui comprend le café moulu à préparer ainsi qu'un filtre de type passoire.

Comme mentionné ci-dessus, le dispositif 1, objet de l'invention, a donc pour objet de permettre la pose, c'est-à-dire le montage ou la dépose, c'est-à-dire le démontage du ou des joints 12 équipant le ou les groupe (s) 14 d'une telle machine 15 à café. Ce dispositif 1 est par exemple conforme à celui représenté aux figures 4 et 5. Ce dispositif 1 comprend donc un corps 2 allongé qui s'étend depuis une de ses extrémités en direction de son autre extrémité suivant un axe XX' longitudinal. Ce corps 2 allongé se présente ici sous forme d'un corps cylindrique de section circulaire qui s'évase depuis sa portion médiane en direction de ses extrémités pour former deux extrémités élargies dudit corps 2. Chaque face d'extrémité dudit corps 2 est ici réalisé plane.

Ce dispositif 1 comprend encore une poignée 3 de saisie qui se raccorde au corps au niveau de la partie médiane dudit corps 2. Cette poignée 3 de saisie qui s'étend radialement par rapport au corps 2 forme ici un manche 31 qui en outre est de longueur ajustable. Ce manche 31 est donc réalisé ici sous forme d'un manche télescopique.

Le dispositif 1 comprend encore deux séries d'oreilles 4 disposées l'une, à l'une des extrémités, l'autre, à l'autre des extrémités du corps 2 allongé. Chaque série d'oreilles comprend, dans l'exemple représenté, deux oreilles 4 diamétralement opposées. Ces oreilles 4 radiales audit corps 2 sont disposées autour dudit corps 2 au moins partiellement sur un cercle C1 de centre disposé sur l'axe XX' longitudinal du corps 2. Chaque oreille 4 comprend deux faces, à savoir une face 41 dite intérieure tournée vers les oreilles 4 de l'autre série et une face 42 extérieure opposée.

Comme l'illustrent les figures, la face 41 intérieure de chaque oreille 4 forme une rampe hélicoïdale inclinée pour permettre, à l'état positionné des rampes 5 d'une série d'oreilles 4 en contact d'appui avec les surfaces19 inclinées formant rampes de forme complémentaire de l'aile 18 circonférentielle interne du groupe 14 et, à l'état entraîné en rotation dudit corps 2 autour de son axe XX' longitudinal, un déplacement axial dudit corps 2. Ce déplacement axial du corps 2 s'opère ainsi dans le sens d'un rapprochement ou d'un écartement du fond de la cavité 16 du groupe 14 selon le sens d'entraînement en rotation du corps 2 autour de son axe longitudinal XX'. On note que les rampes 5 inclinées des faces 41 intérieures des oreilles 4 sont inclinées pour s'étendre de manière parallèle d'une série d'oreilles 4 à une autre lorsque les inclinaisons des pentes sont identiques. La face opposée, encore appelée face 42 extérieure de chaque oreille, est plane de sorte que chaque oreille présente, vue de face comme illustré à la figure 4, une épaisseur qui croît depuis une extrémité en direction de l'autre extrémité de ladite oreille 4. La pente de la rampe inclinée formée par la face 41 intérieure de chaque oreille 4 présente une valeur d'angle correspondant à l'angle formé par cette dite face 41 intérieure avec l'axe XX' longitudinal dudit corps.

Les extrémités du corps 2 assurent chacune l'une des fonctions du dispositif 1. Ainsi, l'une des extrémités, dite extrémité 6 de pose du joint du corps 2 est munie d'un plateau 7 pour la réception d'un joint 12 à poser. Ce plateau 7 est un plateau tournant autour d'un axe confondu avec l'axe XX' longitudinal du corps 2. L'extrémité du corps 2 opposée à l'extrémité 6 de pose du joint et dite extrémité 8 de dépose de joint dudit corps 2 est munie quant à elle d'organes 9 d'ancrage s'étendant en saillie de l'extrémité 8. Ces organes d'ancrage qui, dans l'exemple représenté, sont au nombre de trois sont disposés sur un cercle C2 de centre disposé sur l'axe de rotation du plateau 7 tournant ou l'axe XX' longitudinal du corps 2. L'extrémité 8 de dépose du joint du corps 2 présente une surface plane et les organes 9 d'ancrage se présentent sous forme d'ergots ou de dents en crochet en saillie de ladite surface plane. Idéalement, ces organes 9 d'ancrage sont au moins au nombre de six ou huit.

Côté extrémité 6 de pose de joint du corps 2, le plateau 7 tournant, qui est monté libre à rotation, est muni d'une saillie 10 circulaire délimitant, à la surface du plateau 7, un logement 11 circulaire. Ce logement 11 circulaire facilite la mise en place du joint 12 à poser sur ledit plateau 7 tournant.

Idéalement, le corps 2 et le plateau 7 tournant, de même que les organes 9 d'ancrage sont en métal. Pour permettre la pose d'un joint 12 à l'aide d'un dispositif 1 de pose/dépose de joint du type de celui décrit ci-dessus, on procède comme suit. On suppose qu'un joint 12 à poser est positionné sur le plateau 7 tournant de l'extrémité 6 de pose du corps 2 à l'intérieur du logement 11 circulaire délimité par la saillie 10 circulaire. L'opérateur saisit par son manche le dispositif 1 de pose/dépose de joint et positionne les oreilles 4 de l'extrémité 6 de pose en regard des encoches 20 du groupe 14. L'opérateur introduit ensuite axialement le corps 2 et par suite le côté plateau 7 tournant prééquipé du joint 12 à poser à l'intérieur de la cavité 16 avant d'entraîner en rotation le corps 2 autour de son axe XX' longitudinal suivant un premier sens de rotation pour générer, par coopération des surfaces 19 inclinées formant rampes de l'aile 18 avec les rampes 5 hélicoïdales inclinées de forme complémentaire des oreilles 4 du corps 2, un déplacement axial du corps 2 dans le sens d'un rapprochement de l'extrémité 6 de pose du corps 2 du fond 17 de la cavité 16 jusqu'à insertion du joint 12 reposant sur le plateau 7 tournant dans la gorge 21 annulaire du fond 17 de la cavité 16 du groupe. Après l'étape d'entraînement en rotation du corps 2 autour de son axe XX' longitudinal suivant un premier sens de rotation, l'opérateur entraîne en rotation le corps 2 autour de son axe XX' longitudinal suivant un deuxième sens de rotation opposé au premier sens de rotation pour générer, par coopération des surfaces19 inclinées formant rampes de l'aile 18 du groupe 14 avec les rampes 5 hélicoïdales inclinées de forme complémentaire des oreilles 4 du corps 2, un déplacement axial du corps 2 dans le sens d'un écartement de l'extrémité 8 de dépose du corps 2 du fond 17 de la cavité 16 du groupe 14 jusqu'à positionnement des oreilles 4 de l'extrémité 6 de pose du corps 2 en regard des encoches 20 de l'aile 18 du groupe 14 en vue de permettre ensuite, par déplacement axial du corps 2, une sortie axiale du corps 2 de l'intérieur de la cavité 16. La pose du joint 12 peut ainsi s'opérer sans risque de brûlure de l'opérateur et en un temps court.

La dépose ou démontage du joint s'opère quant à elle comme suit. L'opérateur saisit par le manche le dispositif 1 de pose/dépose du joint et positionne les oreilles 4 de l'extrémité 8 de dépose en regard des encoches 20 de l'aile 18. Il introduit axialement le corps 2 à l'intérieur de la cavité 16 puis entraîne en rotation le corps 2 autour de son axe XX' longitudinal suivant un premier sens de rotation pour générer, par coopération des surfaces 19 inclinées formant rampes de l'aile 18 avec les rampes 5 hélicoïdales inclinées de forme complémentaire des oreilles du corps 2, un déplacement axial du corps 2 dans le sens d'un rapprochement de l'extrémité 8 de dépose du corps 2 du fond 17 de la cavité 16 du groupe 14 et par suite, la venue en prise des organes 9 d'ancrage de l'extrémité 8 de dépose du corps 2 avec le joint 12 à démonter, le joint 12 étant en un matériau souple élastiquement déformable. Les organes d'ancrage viennent simplement se ficher dans ledit joint. La coopération des surfaces 19 et des rampes 5 s'opère quant à elle par simple contact d'appui. L'opérateur entraîne ensuite en rotation le corps 2 autour de son axe XX' longitudinal suivant un deuxième sens de rotation opposé au premier sens de rotation pour générer, par coopération des surfaces 19 inclinées formant rampes de l'aile 18 avec les rampes 5 hélicoïdales inclinées de forme complémentaire des oreilles 4 du corps 2, un déplacement axial du corps 2 dans le sens d'un écartement de l'extrémité 8 de dépose du corps 2 du fond 17 de la cavité 16 du groupe 14 jusqu'à positionnement des oreilles 4 de l'extrémité de dépose du corps 2 en regard des encoches 20 de l'aile 18 en vue d'une sortie axiale du corps 2 de l'intérieur de la cavité. Le joint 12, couplé par les organes 9 d'ancrage au dispositif 1, est ainsi extrait de la cavité 16 du groupe 14 sans risque de brûlure de l'opérateur et en un temps court.

Pour parfaire le dispositif 1 de pose/dépose de joint, un couvercle 33 peut venir à recouvrement de l'extrémité 8 de dépose du corps 2 du dispositif 1 de pose/dépose de joint. Ce couvercle 33 permet d'aider à séparer le joint 12 des organes 9 d'ancrage. Il suffit ainsi, une fois le joint 12 extrait de la cavité 16 du groupe 14, de coiffer l'extrémité 8 de dépose du corps 2 avec le couvercle 33. Ce couvercle 33 comprend une gorge circulaire à l'intérieur de laquelle le joint 12 peut venir s'insérer lorsque le couvercle 33 coiffe le joint 12. Ce joint 12 est pincé par les bords longitudinaux de la gorge. Il suffit d'entraîner en rotation le couvercle 33 pour libérer le joint 12 des organes 9 d'ancrage. Le joint 12 peut ensuite être retiré du couvercle 33. Ce couvercle 33 peut, pendant les périodes de non utilisation du dispositif 1 de pose/dépose de joint, venir à recouvrement des organes 9 d'ancrage pour éviter toute blessure avec les organes 9 d'ancrage.

## Revendications

1. Dispositif (1) de pose/dépose de joint, notamment de joint (12) de groupe (14) d'injection de machine (15) à café, **caractérisé en ce que** ledit dispositif (1) comprend un corps (2) dit allongé s'étendant depuis une de ses extrémités en direction de son extrémité opposée suivant un axe (XX') longitudinal, une poignée (3) de saisie dudit corps (2) s'étendant au moins radialement par rapport audit corps (2), et deux séries d'oreilles (4) disposées l'une, à l'une des extrémités , l'autre, à l'autre des extrémités dudit corps (2) allongé, **en ce que** chaque oreille (4) d'une série, radiale par rapport audit corps (2), est disposée autour dudit corps (2) au moins partiellement sur un cercle (C1) de centre disposé sur l'axe (XX') longitudinal dudit corps (2), **en ce que** chaque oreille (4) d'une série présente une face (41) dite intérieure tournée vers les oreilles (4) de l'autre série et une face (42) extérieure opposée, **en ce que** la face (41) intérieure des ou d'au moins deux des oreilles (4) de chaque série d'oreilles forme une rampe (5) hélicoïdale inclinée pour permettre, à l'état positionné des rampes (5) d'une série d'oreilles (4) en contact d'appui avec des surfaces (19) inclinées formant rampes de formes complémentaires et, à l'état entraîné en rotation dudit corps (2) autour de son axe (XX') longitudinal, un déplacement axial dudit corps (2), **en ce que** l'une des extrémités (6), dite extrémité de pose de joint, dudit corps (2) est munie d'un plateau (7) pour la réception d'un joint (12) à poser, **en ce que** ledit plateau (7) est un plateau tournant autour d'un axe confondu avec l'axe (XX') longitudinal dudit corps (2), et **en ce que** l'extrémité du corps (2) opposée à l'extrémité (6) de pose de joint et dite extrémité (8) de dépose de joint dudit corps (2) est munie d'organes (9) d'ancrage s'étendant en saillie de ladite extrémité (8).

2. Dispositif (1) de pose/dépose de joint selon la revendication 1, **caractérisé en ce que** les organes (9) d'ancrage sont disposés sur un cercle (C2) de centre disposé sur l'axe de rotation du plateau (7) tournant.

3. Dispositif (1) de pose/dépose de joint selon l'une des revendications 1 ou 2, **caractérisé en ce que** l'extrémité (8) de dépose de joint dudit corps (2) présente une surface plane et **en ce que** les organes (9) d'ancrage se présentent sous forme d'ergots ou de dents en crochet en saillie de ladite surface plane.

4. Dispositif (1) de pose/dépose de joint selon l'une des revendications 1 à 3, **caractérisé en ce que** ladite poignée (3) de saisie forme un manche (31).

5. Dispositif (1) de pose/dépose de joint selon la revendication 4, **caractérisé en ce que** le manche (31) est un manche télescopique.

6. Dispositif (1) de pose/dépose de joint selon l'une des revendications 1 à 5, **caractérisé en ce que** le plateau (7) tournant est muni d'une saillie (10) circulaire délimitant à la surface du plateau (7) un logement (11) circulaire.

7. Dispositif (1) de pose/dépose de joint selon l'une des revendications 1 à 6, **caractérisé en ce que** les rampes (5) inclinées des faces (41) intérieures des oreilles (4) sont inclinées pour s'étendre de manière parallèle d'une série d'oreilles (4) à une autre lorsque les inclinaisons des pentes sont identiques.

8. Procédé de pose d'un joint (12) d'un groupe (14) de machine (15) à café, ledit groupe (14) définissant une cavité (16) ouverte dont le fond (17) est muni d'une gorge (21) annulaire de réception du joint (12) à poser, l'entrée de la cavité (16), opposée audit fond (17), étant munie d'une aile (18) circonférentielle interne avec une face tournée vers le fond (17) de la cavité (16), cette face de l'aile (18) tournée vers le fond (17) de la cavité étant munie de surfaces (19) inclinées formant rampes séparées l'une de l'autre par des ouvertures en forme d'encoches (20) ménagées dans ladite aile (18), **caractérisé en ce que** le procédé comprend, pour la pose du joint (12) à l'aide d'un dispositif (1) conforme à l'une des revendications 1 à 7, une étape de positionnement des oreilles (4) de l'extrémité (6) de pose en regard des encoches (20) du groupe (14) et d'introduction axiale du plateau (7) tournant pré-équipé du joint (12) à poser à l'intérieur de la cavité (16) avant entraînement en rotation dudit corps (2) autour de son axe (XX') longitudinal suivant un premier sens de rotation pour générer par coopération des surfaces (19) inclinées formant rampes de l'aile (18) avec les rampes (5) hélicoïdales inclinées de forme complémentaire des oreilles (4) du corps (2) un déplacement axial du corps (2) dans le sens d'un rapprochement de l'extrémité (6) de pose du corps (2) du fond (17) de la cavité (16) jusqu'à insertion du joint (12) reposant sur le plateau (7) tournant dans la gorge (21) annulaire.

9. Procédé de pose d'un joint (12) de groupe (14) de machine (15) à café selon la revendication 8, **caractérisé en ce que** le procédé comprend, après l'étape d'entraînement en rotation dudit corps (2) autour de son axe (XX') longitudinal suivant un premier sens de rotation, une étape d'entraînement en rotation du corps (2) autour de son axe (XX') longitudinal suivant un deuxième sens de rotation opposé au premier sens de rotation pour générer, par coopération des surfaces (19) inclinées formant rampes de l'aile (18) avec les rampes (5) hélicoïdales inclinées de forme complémentaire des oreilles (4) du corps (2), un déplacement axial du corps (2) dans le sens d'un écartement de l'extrémité (6) de pose du corps (2) du fond (17) de la cavité (16) du groupe (14) jusqu'à positionnement des oreilles (4) de l'extrémité (8) de dépose du corps (2) en regard des encoches (20) de l'aile (18) en vue d'une sortie axiale du corps (2) de l'intérieur de la cavité (16).

10. Procédé de dépose d'un joint (12) d'un groupe (14) de machine (15) à café, ledit groupe (14) définissant une cavité (16) ouverte dont le fond (17) est muni d'une gorge (21) annulaire de réception du joint (12) à démonter, l'entrée de la cavité (16), opposée audit fond (17), étant munie d'une aile (18) circonférentielle interne avec une face tournée vers le fond (17) de la cavité (16), cette face de l'aile (18) tournée vers le fond (17) de la cavité (16) étant munie de surfaces (19) inclinées formant rampes séparées l'une de l'autre par des ouvertures en forme d'encoches (20) ménagées dans ladite aile (18), **caractérisé en ce que** le procédé comprend, pour le démontage du joint (12) à l'aide d'un dispositif (1) conforme à l'une des revendications 1 à 7, une étape de positionnement des oreilles (4) de l'extrémité (8) de dépose en regard des encoches (20) de l'aile (18) et d'introduction axiale du corps (2) à l'intérieur de la cavité (16) du groupe (14), une étape d'entraînement en rotation du corps (2) autour de son axe (XX') longitudinal suivant un premier sens de rotation pour générer par coopération des surfaces (19) inclinées formant rampes de l'aile (18) avec les rampes (5) hélicoïdales inclinées de forme complémentaire des oreilles (4) du corps (2) un déplacement axial du corps (2) dans le sens d'un rapprochement de l'extrémité (8) de dépose du corps (2) du fond (17) de la cavité (16) du groupe (14) et par suite, la venue en prise des organes (9) d'ancrage de l'extrémité (8) de dépose du corps (2) avec le joint (12) à démonter et une étape d'entraînement en rotation du corps (2) autour de son axe (XX') longitudinal suivant un deuxième sens de rotation opposé au premier sens de rotation pour générer par coopération des surfaces (19) inclinées formant rampes de l'aile (18) avec les rampes (5) hélicoïdales inclinées de forme complémentaire des oreilles (4) du corps (2) un déplacement axial du corps (2) dans le sens d'un écartement de l'extrémité de dépose du corps (2) du fond (17) de la cavité (16) du groupe (14) jusqu'à positionnement des oreilles (4) de l'extrémité (8) de dépose du corps (2) en regard des encoches (20) de l'aile (18) en vue d'une sortie axiale du corps (2) de l'intérieur de la cavité (16).

## Patentansprüche

1. Vorrichtung (1) zum Anbringen/Entfernen einer Dichtung, insbesondere einer Dichtung (12) einer Einspritzgruppe (14) einer Kaffeemaschine (15), **dadurch gekennzeichnet, dass** die Vorrichtung (1) einen länglichen Körper (2), der sich von einem ihrer Enden in Richtung ihres gegenüberliegenden Endes entlang einer Längsachse (XX') erstreckt, einen Handgriff (3) zum Greifen des Körpers (2), der sich wenigstens radial im Verhältnis zum Körper (2) erstreckt, und zwei Reihen von Ansätzen (4), von denen einer an einem der Enden, der andere am anderen der Enden des länglichen Körpers (2) angeordnet ist, umfasst, dadurch, dass jeder Ansatz (4) einer Reihe, der radial im Verhältnis zum Körper (2) angeordnet ist, um den Körper (2) wenigstens teilweise auf einem Mittelkreis (C1) angeordnet ist, der auf der Längsachse (XX') des Körpers (2) angeordnet ist, dadurch, dass jeder Ansatz (4) einer Reihe eine Innenseite (41), die zu den Ansätzen (4), der anderen Reihe gewandt ist, und eine gegenüberliegende Außenseite (42) aufweist, dadurch, dass die Innenseite (41) der oder von wenigstens zweien der Ansätze (4) jeder Reihe von Ansätzen eine geneigte spiralförmige Rampe (5) bildet, um im positionierten Zustand der Rampen (5) einer Reihe von Ansätzen (4) in Anlagekontakt mit geneigten Flächen (19), die Rampen mit komplementären Formen bilden, und im gedrehten Zustand des Körpers (2) um seine Längsachse (XX') eine axiale Bewegung des Körpers (2) zu ermöglichen, dadurch, dass eins der Enden (6), das Dichtungsanbringungsende, des Körpers (2) mit einer Platte (7) zur Aufnahme einer anzubringenden Dichtung (12) versehen ist, dadurch dass die Platte (7) eine Platte ist, die sich um eine Achse dreht, die mit der Längsachse (XX') des Körpers (2) zusammenfällt, und dadurch, dass das Ende des Körpers (2), das dem Dichtungsanbringungsende (6) gegenüberliegt und Dichtungsentfernungsende (8) des Körpers (2) genannt wird, mit Verankerungsorganen (9) versehen ist, die sich von dem Ende (8) hervorstehend erstrecken.

2. Vorrichtung (1) zum Anbringen/Entfernen einer Dichtung nach Anspruch 1, **dadurch gekennzeichnet, dass** die Verankerungsorgane (9) auf einem Mittelkreis (C2) angeordnet sind, der auf der Drehachse der Drehplatte (7) angeordnet ist.

3. Vorrichtung (1) zum Anbringen/Entfernen einer Dichtung nach einem der Ansprüche 1 oder 2, **dadurch gekennzeichnet, dass** das Dichtungsentfernungsende (8) des Körpers (2) eine ebene Fläche aufweist, und dadurch, dass die Verankerungsorgane (9) in Form von hakenartigen Vorsprüngen oder Zähnen vorliegen, die von der ebenen Fläche hervorstehen.

4. Vorrichtung (1) zum Anbringen/Entfernen einer Dichtung nach einem der Ansprüche 1 bis 3, **dadurch gekennzeichnet, dass** der Handgriff (3) zum Greifen einen Stiel (31) bildet.

5. Vorrichtung (1) zum Anbringen/Entfernen einer Dichtung nach Anspruch 4, **dadurch gekennzeichnet, dass** der Stiel (31) ein Teleskopstiel ist.

6. Vorrichtung (1) zum Anbringen/Entfernen einer Dichtung nach einem der Ansprüche 1 bis 5, **dadurch gekennzeichnet, dass** die Drehplatte (7) mit einem kreisförmigen Vorsprung (10) versehen ist, der an der Oberfläche der Platte (7) eine kreisförmige Aufnahme (11) begrenzt.

7. Vorrichtung (1) zum Anbringen/Entfernen einer Dichtung nach einem der Ansprüche 1 bis 6, **dadurch gekennzeichnet, dass** die geneigten Rampen (5) der Innenseiten (41) der Ansätze (4) geneigt sind, um sich parallel von einer Reihe von Ansätzen (4) zu einer anderen zu erstrecken, wenn die Neigungen der Schrägen identisch sind.

8. Verfahren zum Anbringen einer Dichtung (12) einer Gruppe (14) einer Kaffeemaschine (15), wobei die Gruppe (14) einen offenen Hohlraum (16) definiert, dessen Boden (17) mit einer ringförmigen Rille (21) zur Aufnahme der anzubringenden Dichtung (12) versehen ist, wobei der Eingang zum Hohlraum (16), der dem Boden (17) gegenüberliegt, mit einer umlaufenden Innenrippe (18) mit einer zum Boden (17) des Hohlraums (16) gewandten Seite versehen ist, wobei diese zum Boden (17) des Hohlraums gewandte Seite der Rippe (18) mit geneigten Flächen (19) versehen ist, die Rampen bilden, die durch Öffnungen in Form von Aussparungen (20), die in der Rippe (18) angeordnet sind, voneinander getrennt sind, **dadurch gekennzeichnet, dass** das Verfahren für das Anbringen der Dichtung (12) mithilfe einer Vorrichtung (1) nach einem der Ansprüche 1 bis 7 einen Schritt des Positionierens der Ansätze (4) des Anbringungsendes (6) gegenüber den Aussparungen (20) der Gruppe (14) und des axialen Einführens der Drehplatte (7), die mit der anzubringenden Dichtung (12) vorgerüstet ist, ins Innere des Hohlraums (16) vor dem Drehen des Körpers (2) um seine Längsachse (XX') in einer ersten Drehrichtung, um durch Zusammenwirkung der geneigten Flächen (19), die Rampen der Rippe (18) bilden, mit den geneigten spiralförmigen Rampen (5) mit komplementärer Form der Ansätze (4) des Körpers (2) eine axiale Bewegung des Körpers (2) in Richtung einer Annäherung des Anbringungsendes (6) des Körpers (2) an den Boden (17) des Hohlraums (16) bis zur Einfügung der Dichtung (12), die auf der Drehplatte (7) aufliegt, in die ringförmige Rille (21) zu erzeugen, umfasst.e.

9. Verfahren zum Anbringen einer Dichtung (12) einer Gruppe (14) einer Kaffeemaschine (15) nach Anspruch 8, **dadurch gekennzeichnet, dass** das Verfahren nach dem Schritt des Drehens des Körpers (2) um seine Längsachse (XX') in einer ersten Drehrichtung einen Schritt des Drehens des Körpers (2) um seine Längsachse (XX') in einer zweiten Drehrichtung, die der ersten Drehrichtung entgegengesetzt ist, umfasst, um durch Zusammenwirkung der geneigten Flächen (19), die Rampen der Rippe (18) bilden, mit den geneigten spiralförmigen Rampen (5) mit komplementärer Form der Ansätze (4) des Körpers (2) eine axiale Bewegung des Körpers (2) in Richtung einer Beabstandung des Anbringungsendes (6) des Körpers (2) vom Boden (17) des Hohlraums (16) der Gruppe (14) bis zur Positionierung der Ansätze (4) des Entfernungsendes (8) des Körpers (2) gegenüber den Aussparungen (20) der Rippe (18) zwecks einer axialen Entnahme des Körpers (2) aus dem Inneren des Hohlraums (16) zu erzeugen.

10. Verfahren zum Entfernen einer Dichtung (12) einer Gruppe (14) einer Kaffeemaschine (15), wobei die Gruppe (14) einen offenen Hohlraum (16) definiert, dessen Boden (17) mit einer ringförmigen Rille (21) zur Aufnahme der zu entfernenden Dichtung (12) versehen ist, wobei der Eingang zum Hohlraum (16), der dem Boden (17) gegenüberliegt, mit einer umlaufenden Innenrippe (18) mit einer zum Boden (17) des Hohlraums (16) gewandten Seite versehen ist, wobei diese zum Boden (17) des Hohlraums (16) gewandte Seite der Rippe (18) mit geneigten Flächen (19) versehen ist, die Rampen bilden, die durch Öffnungen in Form von Aussparungen (20), die in der Rippe (18) angeordnet sind, voneinander getrennt sind, **dadurch gekennzeichnet, dass** das Verfahren für das Entfernen der Dichtung (12) mithilfe einer Vorrichtung (1) nach einem der Ansprüche 1 bis 7 einen Schritt des Positionierens der Ansätze (4) des Entfernungsendes (8) gegenüber den Aussparungen (20) der Rippe (18) und des axialen Einführens des Körpers (2) ins Innere des Hohlraums (16) der Gruppe (14), einen Schritt des Drehens des Körpers (2) um seine Längsachse (XX') in einer ersten Drehrichtung, um durch Zusammenwirkung der geneigten Flächen (19), die Rampen der Rippe (18) bilden, mit den geneigten spiralförmigen Rampen (5) mit komplementärer Form der Ansätze (4) des Körpers (2) eine axiale Bewegung des Körpers (2) in Richtung einer Annäherung des Entfernungsendes (8) des Körpers (2) an den Boden (17) des Hohlraums (16) der Gruppe (14) und somit den Eingriff der Verankerungsorgane (9) des Entfernungsendes (8) des Körpers (2) mit der zu entfernenden Dichtung (12) zu erzeugen, und einen Schritt des Drehens des Körpers (2) um seine Längsachse (XX') in einer zweiten Drehrichtung, die der ersten Drehrichtung entgegengesetzt ist, um durch Zusammenwirkung der geneigten Flächen (19), die Rampen der Rippe (18) bilden, mit den geneigten spiralförmigen Rampen (5) mit komplementärer Form der Ansätze (4) des Körpers (2) eine axiale Bewegung des Körpers (2) in Richtung einer Beabstandung des Entfernungsendes des Körpers (2) vom Boden (17) des Hohlraums (16) der Gruppe (14) bis zur Positionierung der Ansätze (4) des Entfernungsendes (8) des Körpers (2) gegenüber den Aussparungen (20) der Rippe (18) zwecks einer axialen Entnahme des Körpers (2) aus dem Inneren des Hohlraums (16) zu erzeugen, umfasst.

## Claims

1. A device (1) for installing/removing a seal, notably a seal (12) of an injection group (14) of a coffee machine (15), **characterized in that** said device (1) comprises a so-called elongate body (2) extending from one of its ends toward its opposite end along a longitudinal axis (XX'), a handle (3) for gripping said body (2) extending at least radially with respect to said body (2), and two series of lugs (4), one of which is arranged at one of the ends, the other of which is arranged at the other of the ends of said elongate body (2), **in that** each lug (4) of a series, which is radial with respect to said body (2), is arranged around said body (2) at least partially over a circle (C1) of center positioned on the longitudinal axis (XX') of said body (2), **in that** each lug (4) of a series has a so-called inner face (41) turned toward the lugs (4) of the other series and an opposite outer face (42), **in that** the inner face (41) of the or of at least two of the lugs (4) of each series of lugs forms an inclined helical ramp (5) to allow, when the ramps (5) of a series of lugs (4) are in the state positioned in bearing contact with ramp-forming inclined surfaces (19) of complementary forms and when said body (2) is in the state driven in rotation about its longitudinal axis (XX'), an axial displacement of said body (2), **in that** one of the ends (6), called seal installation end, of said body (2) is provided with a plate (7) for the reception of a seal (12) to be installed, **in that** said plate (7) is a plate revolving about an axis coinciding with the longitudinal axis (XX') of said body (2), and **in that** the end of the body (2) opposite the seal installation end (6) and called seal removal end (8) of said body (2) is provided with anchoring members (9) protruding from said end (8).

2. The seal installation/removal device (1) as claimed in claim 1, **characterized in that** the anchoring members (9) are arranged on a circle (C2) of center positioned on the axis of rotation of the revolving plate (7).

3. The seal installation/removal device (1) as claimed in one of claims 1 and 2, **characterized in that** the seal removal end (8) of said body (2) has a flat surface and **in that** the anchoring members (9) take the form of snugs or hooked teeth protruding from said flat surface.

4. The seal installation/removal device (1) as claimed in one of claims 1 to 3, **characterized in that** said gripping handle (3) forms a stick (31).

5. The seal installation/removal device (1) as claimed in claim 4, **characterized in that** the stick (31) is a telescopic stick.

6. The seal installation/removal device (1) as claimed in one of claims 1 to 5, **characterized in that** the revolving plate (7) is provided with a circular protuberance (10) delimiting on the surface of the plate (7) a circular recess (11).

7. The seal installation/removal device (1) as claimed in one of claims 1 to 6, **characterized in that** the inclined ramps (5) of the inner faces (41) of the lugs (4) are inclined to extend in parallel from one series of lugs (4) to another when the inclinations of the slopes are identical.

8. A method for installing a seal (12) of a group (14) of a coffee machine (15), said group (14) defining an open cavity (16), the bottom (17) of which is provided with an annular groove (21) for receiving the seal (12) to be installed, the entry of the cavity (16), opposite said bottom (17), being provided with an internal circumferential wing (18) with a face turned toward the bottom (17) of the cavity (16), this face of the wing (18) turned toward the bottom (17) of the cavity being provided with inclined surfaces (19) forming ramps separated from one another by apertures in the form of notches (20) formed in said wing (18), **characterized in that** the method comprises, for the installation of the seal (12) using a device (1) conforming to one of claims 1 to 7, a step of positioning of the lugs (4) of the installation end (6) opposite the notches (20) of the group (14) and of axial introduction of the revolving plate (7) prefitted with the seal (12) to be installed inside the cavity (16) before said body (2) is driven in rotation about its longitudinal axis (XX') in a first direction of rotation to generate, by cooperation of the ramp-forming inclined surfaces (19) of the wing (18) with the inclined helical ramps (5) of complementary form of the lugs (4) of the body (2), an axial displacement of the body (2) in the direction of convergence of the installation end (6) of the body (2) with the bottom (17) of the cavity (16) until the seal (12) resting on the revolving plate (7) is inserted into the annular groove (21).

9. The method for installing a seal (12) of a group (14) of a coffee machine (15) as claimed in claim 8, **characterized in that** the method comprises, after the step of driving of said body (2) in rotation about its longitudinal axis (XX') in a first direction of rotation, a step of driving of the body (2) in rotation about its longitudinal axis (XX') in a second direction of rotation opposite the first direction of rotation to generate, by cooperation of the ramp-forming inclined surfaces (19) of the wing (18) with the inclined helical ramps (5) of complementary form of the lugs (4) of the body (2), an axial displacement of the body (2) in the direction of separation of the installation end (6) of the body (2) from the bottom (17) of the cavity (16) of the group (14) until the lugs (4) of the removal end (8) of the body (2) are positioned opposite the notches (20) of the wing (18) in order for the body (2) to be extracted axially from the interior of the cavity (16).

10. A method for removing a seal (12) of a group (14) of a coffee machine (15), said group (14) defining an open cavity (16), the bottom (17) of which is provided with an annular groove (21) for receiving the seal (12) to be dismounted, the entry of the cavity (16), opposite said bottom (17), being provided with an internal circumferential wing (18) with a face turned toward the bottom (17) of the cavity (16), this face of the wing (18) turned toward the bottom (17) of the cavity (16) being provided with inclined surfaces (19) forming ramps separated from one another by apertures in the form of notches (20) formed in said wing (18), **characterized in that** the method comprises, for the dismounting of the seal (12) using a device (1) conforming to one of claims 1 to 7, a step of positioning of the lugs (4) of the removal end (8) opposite the notches (20) of the wing (18) and of axial introduction of the body (2) into the cavity (16) of the group (14), a step of driving of the body (2) in rotation about its longitudinal axis (XX') in a first direction of rotation to generate, by cooperation of the ramp-forming inclined surfaces (19) of the wing (18) with the inclined helical ramps (5) of complementary form of the lugs (4) of the body (2), an axial displacement of the body (2) in the direction of convergence of the removal end (8) of the body (2) with the bottom (17) of the cavity (16) of the group (14) and consequently, the engagement of the anchoring members (9) of the removal end (8) of the body (2) with the seal (12) to be dismounted and a step of driving of the body (2) in rotation about its longitudinal axis (XX') in a second direction of rotation opposite the first direction of rotation to generate, by cooperation of the ramp-forming inclined surfaces (19) of the wing (18) with the inclined helical ramps (5) of complementary form of the lugs (4) of the body (2), an axial displacement of the body (2) in the direction of separation of the removal end of the body (2) from the bottom (17) of the cavity (16) of the group (14) until the lugs (4) of the removal end (8) of the body (2) are positioned opposite the notches (20) of the wing (18) in order for the body (2) to be extracted axially from the interior of the cavity (16).
